# EUROPEAN PATENT APPLICATION

(11) **EP 4 410 091 A1**
(43) Date of publication of application: **07.08.2024**
(21) Application number: 22871682.5
(22) Date of filing: 16.08.2022
(51) Int. Cl.: A01G 3/08

(54) **GARDENING TOOL**

(30) Priority: 27.09.2021 CN 202111133972
(71) Applicant: Nanjing Chervon Industry Co., Ltd., Nanjing, Jiangsu 211106 (CN)
(72) Inventor: LI, Li, Nanjing, Jiangsu 211106 (CN); LI, Haiyan, Nanjing, Jiangsu 211106 (CN)
(74) Representative: Sun, Yiming
(86) International application number: PCT/CN2022/112668
(87) International publication number: WO 2023/045624

(57) **Abstract**

Provided is a garden tool, which belongs to the technical field of power tools. The garden tool includes: an electric motor; a housing formed with or connected to a front handle and a rear handle for a user to hold, where the front handle is held by one hand of the user, and the rear handle is held by the other hand of the user; a first operation switch controlled by the front handle; a second operation switch controlled by the rear handle; and a controller configured to control the electric motor according to a sequence in which the first operation switch and the second operation switch are turned on.

## Description

This application claims priority to Chinese Patent Application No. 202111133972.4 filed with the China National Intellectual Property Administration (CNIPA) on Sept. 27, 2021, the disclosure of which is incorporated herein by reference in its entirety.

### TECHNICAL FIELD

Examples of the present application relate to the technical field of power tools and, in particular, to a garden tool.

### BACKGROUND

As a garden tool, a pruner is widely used for pruning vegetation such as shrubs and hedges.

In the related art, the pruner typically includes a housing. The housing is formed with or connected to a rear handle and a front handle for a user to hold. Each of the front handle and the rear handle is provided with a handle switch. The user needs to press the two handle switches at the same time so that the pruner can be started. However, for convenient operation, the user binds the front handle switch with another tool (for example, an adhesive tape, a tie, or a rope) and then presses the rear handle switch to start the pruner. However, this operation manner has certain security risks.

### SUMMARY

Examples of the present application provide a garden tool, which can improve the operation security of the garden tool. Technical solutions are described below.

In one aspect, examples of the present application provide a garden tool. The garden tool includes: an electric motor; a housing formed with or connected to a front handle and a rear handle for a user to hold, where the front handle is held by one hand of the user, and the rear handle is held by the other hand of the user; a first operation switch disposed on the front handle; a second operation switch disposed on the rear handle; and a controller configured to control, according to a sequence in which the first operation switch and the second operation switch are turned on, the electric motor to start.

In another aspect, examples of the present application provide a garden tool. The garden tool includes: an electric motor; a housing formed with or connected to a front handle and a rear handle for a user to hold, where the front handle is held by one hand of the user, and the rear handle is held by the other hand of the user; a first operation switch disposed on the front handle; and a second operation switch disposed on the rear handle.

The first operation switch is a pressure sensing switch, where the pressure sensing switch is in the on state when being held, and the pressure sensing switch is in the off state when being released.

The technical solutions provided by the examples of the present application can achieve the effect below.

The electric motor is controlled according to the sequence in which the first operation switch controlled by the front handle and the second operation switch controlled by the rear handle are turned on. Compared with the related art in which two operation switches only need to be turned on so that an electric motor can be started, the electric motor needs to be controlled, according to the sequence in which the two operation switches are turned on, to start in the examples of the present application, thereby improving the operation security of the garden tool.

### BRIEF DESCRIPTION OF DRAWINGS

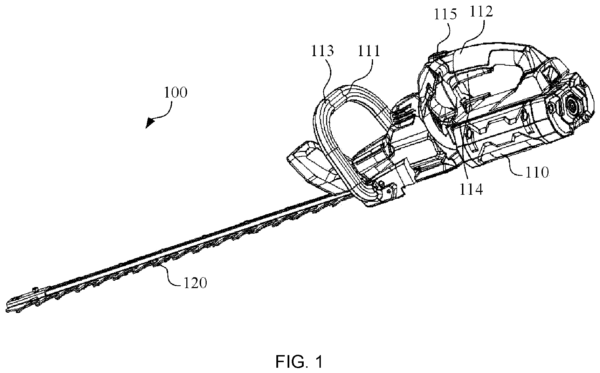

FIG. 1 is a schematic view of a garden tool according to an example of the present application.

### DETAILED DESCRIPTION

To make the object, technical solutions, and advantages of the present application clearer, examples of the present application are further described below in detail in conjunction with drawings.

Reference is made to FIG. 1 which is a schematic view of a garden tool 100 according to an example of the present application. The garden tool 100 includes an electric motor (not shown in the figure) and a housing 110.

For example, as shown in FIG. 1, the garden tool 100 further includes an operation assembly 120.

For example, the garden tool 100 includes any one of a pruner, a string trimmer, a chain saw, and the like.

The pruner is one of the main "members" of garden tools. The pruner is used for pruning branches and hedges to make them grow healthily and be more neat and graceful so that ornamental values are improved. The pruner is an indispensable tool for the greening of courtyards, parks, roads, and the like. The string trimmer may be used for mowing lawns. The string trimmer may directly drive, through a motor rotating at a high speed, a nylon line or a blade on a trimmer head to rotate, thereby cutting grass and achieving a mowing object. The chain saw may be used for sawing wood, branches, and trunks in ground working places or trimming and sawing branches and trunks of various tall trees.

For example, the housing 110 is used for forming an accommodating cavity which accommodates the electric motor. The electric motor is configured to drive the operation assembly 120 to implement functions of a garden tool. In a possible implementation, the garden tool 100 further includes a transmission assembly. The accommodating cavity may be further used for accommodating the transmission assembly. The transmission assembly is used for implementing power transfer between the electric motor and the operation assembly so that the operation assembly is driven to move. For example, the electric motor further includes the shaft of the electric motor which is rotatable about the axis of the electric motor. Part of the operation assembly is accommodated in the accommodating cavity of a housing, and the other part of the operation assembly extends out of the housing along the direction of a longitudinal axis. In the case where the garden tool 100 includes the pruner, the operation assembly 120 includes a blade assembly and the electric motor is configured to drive the blade assembly to implement a cutting function.

In the case where the garden tool 100 includes the string trimmer, the operation assembly 120 includes a grass cutting line and the electric motor is configured to drive the grass cutting line to implement a cutting function. In the case where the garden tool 100 includes the chain saw, the operation assembly 120 includes a chain and the electric motor is configured to drive the chain to implement a cutting function.

For example, the garden tool further includes a power supply apparatus. The power supply apparatus is configured to supply power to the electric motor. The power supply apparatus may be a DC power supply. For example, the power supply apparatus includes a battery pack which can be detachably mounted to the housing. In the case where the power supply apparatus includes the battery pack, the housing may further include a coupling portion. The coupling portion is used for detachably coupling the battery pack to the housing along the direction of the longitudinal axis.

In the example of the present application, the housing 110 is further formed with or connected to a front handle 111 and a rear handle 112 for a user to hold. The front handle 111 is held by one hand of the user, and the rear handle 112 is held by the other hand of the user. The front handle 111 and the rear handle 112 are two different handles. In a possible implementation, the front handle 111 is connected to the outer wall of the housing 110, and the rear handle 112 is extended from the housing 110. The housing 110 extends upward to form the rear handle 112. The front handle 111 is fixedly mounted to the housing 110. That is, the rear handle 112 is formed by the housing 110, and the front handle 111 is independent of the housing 110 and is fixed to the housing 110 through fasteners. Of course, in another possible implementation, the front handle 111 and the housing 110 may be integrally formed, which is not limited in the example of the present application.

The front handle 111 is disposed on the front side of the rear handle 112 to enable the user to hold the front handle 111 and the rear handle 112 simultaneously with both hands when operating the garden tool, thereby implementing more stable operation.

For example, the front handle 111 is closer to the operation assembly 120 than the rear handle 112, and the front handle 111 is spaced a certain distance from the rear handle 112 in the direction of the longitudinal axis so that the user can control the garden tool more stably.

In the example of the present application, the garden tool 100 further includes a first operation switch 113. The first operation switch 113 is controlled by the front handle 111, which refers to that the user may control the first operation switch 113 by operating the front handle 111. For example, the first operation switch 113 is disposed on the front handle 111. Alternatively, the front handle 111 and the first operation switch 113 are independently disposed, that is, the first operation switch 113 may not be disposed on the front handle 111. A position where the first operation switch 113 is disposed is not limited in the example of the present application and may be configured according to a specific situation.

In the example of the present application, the garden tool 100 further includes a second operation switch 114. The second operation switch 114 is controlled by the rear handle 112, which refers to that the user may control the second operation switch 114 by operating the rear handle 112. For example, the second operation switch 114 is disposed on the rear handle 112. Alternatively, the rear handle 112 and the second operation switch 114 are independently disposed, that is, the second operation switch 114 may not be disposed on the rear handle 112. A position where the second operation switch 114 is disposed is not limited in the example of the present application and may be configured according to the specific situation.

In a possible implementation, the first operation switch 113 is a pressure sensing switch, where the pressure sensing switch is in the on state when sensing that the pressure sensing switch is held, and the pressure sensing switch is in the off state when sensing that the pressure sensing switch is released. A pressure sensing switch refers to a switch sensing pressure or a hold. The pressure sensing switch is in the on state when the pressure or the hold is sensed and is in the off state when no pressure or hold is sensed. For example, when the user holds the front handle 111, the first operation switch 113 is in the on state. When the user releases the front handle 111, the first operation switch 113 is in the off state.

In a possible implementation, the pressure sensing switch includes a pressing portion and a flexible thin-film pressure sensor which is connected to the pressing portion, and the pressure sensing switch may detect, through the flexible thin-film pressure sensor, pressure acting on the pressing portion. The pressing portion may be held by the user. For example, the pressing portion may be disposed separately from the front handle. For example, the pressing portion may be disposed outside the front handle and the user may directly contact the pressing portion; or the pressing portion and the front handle may be integrally formed and the user holds the pressing portion while holding the front handle, which is not limited in the example of the present application.

For example, the second operation switch 114 may be a pressure sensing switch. Alternatively, the second operation switch may form a rotatable connection with the rear handle. Alternatively, the second operation switch may form a slidable connection with the rear handle. The type of the second operation switch is not limited in the example of the present application. In the case where the second operation switch 114 is the pressure sensing switch, when the user holds the rear handle 112, the second operation switch 114 is in the on state, and when the user releases the rear handle 112, the second operation switch 114 is in the off state.

In the example of the present application, the garden tool further includes a controller (not shown in the figure), and the controller is configured to control the electric motor according to a sequence in which the first operation switch and the second operation switch are turned on. The sequence in which the first operation switch and the second operation switch are turned on refers to a time sequence in which the first operation switch is in the on state and the second operation switch is in the on state. The sequence in which the first operation switch and the second operation switch are turned on may include any one of the following sequences: the first operation switch is in the on state first and the second operation switch is in the on state later; the second operation switch is in the on state first and the first operation switch is in the on state later; and the first operation switch and the second operation switch are in the on state at the same time. The controller is configured to control the start and stop of the electric motor. The controller may control the start and stop of the electric motor according to the on/off state of the first operation switch and the on/off state of the second operation switch.

For example, in the case where the electric motor does not run, the controller may control the electric motor in the following manner: when the first operation switch is in the on state first and the second operation switch is in the on state later, the controller controls the electric motor to start, when the second operation switch is in the on state first and the first operation switch is in the on state later, the controller does not control the electric motor to start, and when the first operation switch and the second operation switch are in the on state at the same time, the controller does not control the electric motor to start.

It is to be noted that the sequence in which the first operation switch and the second operation switch are turned on refers to a sequence in which the first operation switch changes from the off state to the on state and the second operation switch changes from the off state to the on state, instead of a sequence in which one operation switch is always in the on state and the other operation switch changes from the off state to the on state.

In an illustrative example, the controller is configured to, in the case where the first operation switch is in the on state first and the second operation switch is in the on state later, control the electric motor to start.

In the case where the first operation switch changes from the off state to the on state first and the second operation switch changes from the off state to the on state later, the controller controls the electric motor to start.

For example, the controller may detect the sequence in which the first operation switch and the second operation switch are turned on. In a possible implementation, the controller may determine, in the following manner, the sequence in which the first operation switch and the second operation switch are turned on: after the first operation switch or the second operation switch is turned on, the controller is powered on and may record the identifier of the switch at this time (the identifier of the switch is used for identifying the switch and may be used for indicating that the switch is the first operation switch or the second operation switch) and a turn-on trigger time point of the switch, then, the controller may receive a turn-on trigger signal of another switch and record the identifier of the switch and a turn-on trigger time point at which the turn-on trigger signal is received, and the controller may determine, according to the turn-on trigger time point of the first operation switch and the turn-on trigger time point of the second operation switch, the sequence in which the first operation switch and the second operation switch are turned on. For example, the identifier of the first operation switch is 01, and the identifier of the second operation switch is 10. The user turns on the first operation switch at 10: 00, the first operation switch is triggered by the turn-on, the controller is powered on, and the controller records the following content: 01 and 10: 00. The user turns on the second operation switch at 10: 02, the second operation switch is triggered by the turn-on, the second operation switch sends the turn-on trigger signal to the controller, and the controller records the following content: 10 and 10: 02. The controller determines, according to 10: 00 and 10: 02, that the first operation switch is turned on first and the second operation switch is turned on later.

In a possible implementation, the controller may determine, in the following manner, the sequence in which the first operation switch and the second operation switch are turned on: after the first operation switch or the second operation switch is triggered by the turn-on, the controller is powered on and may record the identifier of the switch at this time and turn-on trigger order corresponding to the switch, then, the controller may receive a turn-on trigger signal of another switch and record the identifier of the switch and turn-on trigger order at the time when the turn-on trigger signal is received, and the controller may determine, according to the turn-on trigger order of the first operation switch and the turn-on trigger order of the second operation switch, the sequence in which the first operation switch and the second operation switch are turned on. For example, the identifier of the first operation switch is 01, and the identifier of the second operation switch is 10. The user turns on the second operation switch at 11: 00, the second operation switch is triggered by the turn-on, the controller is powered on, and the controller records the following content: 10 and 1. The user turns on the first operation switch at 11: 02, the first operation switch is triggered by the turn-on, the first operation switch sends the turn-on trigger signal to the controller, and the controller records the following content: 01 and 2.

The controller determines, according to the turn-on trigger order, 1 and 2, that the second operation switch is turned on first and the first operation switch is turned on later.

It is to be noted that the turn-on trigger signals sent by the first operation switch and the second operation switch to the controller include the identifiers of the switches. Therefore, the controller may determine, according to the received turn-on trigger signals, that the first operation switch is triggered by the turn-on or the second operation switch is triggered by the turn-on at present so that the identifiers of the switches and the turn-on trigger time points/turn-on trigger order of the switches are recorded correspondingly. The turn-on trigger signal is used for indicating that the switch is turned on.

For example, after the controller is powered off, the identifiers of the switches and the turn-on trigger time points/turn-on trigger order corresponding to the switches previously stored in the controller are cleared. After the controller is powered on next time, the controller records the identifiers of the switches and the turn-on trigger time points/turn-on trigger order corresponding to the switches again, so as to determine the sequence in which the first operation switch and the second operation switch are turned on.

In a possible implementation, the garden tool includes a first detection circuit and a second detection circuit, where the first detection circuit is configured to detect that the first operation switch is turned on/off, and the second detection circuit is configured to detect that the second operation switch is turned on/off. After determining that the first operation switch is triggered by the turn-on, the first detection circuit sends the turn-on trigger signal to the controller. The controller records the identifier of the first operation switch (the identifier of the first operation switch is used for indicating the first operation switch, and the first detection circuit corresponds to the first operation switch) and the turn-on trigger time point/turn-on trigger order of the first operation switch. After determining that the second operation switch is triggered by the turn-on, the second detection circuit sends the turn-on trigger signal to the controller. The controller records the identifier of the second operation switch (the identifier of the second operation switch is used for indicating the second operation switch, and the second detection circuit corresponds to the second operation switch) and the turn-on trigger time point/turn-on trigger order of the second operation switch. The controller determines, according to the turn-on trigger time points/turn-on trigger order, the sequence in which the first operation switch and the second operation switch are turned on.

It is to be noted that the turn-on trigger signals sent by the first detection circuit and the second detection circuit to the controller include the identifiers of the operation switches. Therefore, the controller may determine, according to the received turn-on trigger signals, that the first operation switch is triggered by the turn-on or the second operation switch is triggered by the turn-on at present so that the identifiers of the operation switches and the turn-on trigger time points/turn-on trigger order of the operation switches are recorded correspondingly.

For example, after the controller is powered off, the identifiers of the operation switches and the turn-on trigger time points/turn-on trigger order corresponding to the operation switches previously stored in the controller are cleared. After the controller is powered on next time, the controller records the identifiers of the operation switches and the turn-on trigger time points/turn-on trigger order corresponding to the operation switches again, so as to determine the sequence in which the first operation switch and the second operation switch are turned on.

In summary, in the technical solution provided in the example of the present application, the electric motor is controlled according to the sequence in which the first operation switch controlled by the front handle and the second operation switch controlled by the rear handle are turned on. Compared with the related art in which two operation switches only need to be turned on so that an electric motor can be started, the electric motor needs to be controlled, according to the sequence in which the two operation switches are turned on, to start in the examples of the present application, thereby improving the operation security of the garden tool.

In an illustrative example, as shown in FIG. 1, the garden tool further includes a lock switch 115 controlled by the front handle 111 or the rear handle 112, that is, the user may control the lock switch 115 by operating the front handle 111 or the rear handle 112. For example, the lock switch 115 may be disposed on the front handle 111 or the rear handle 112. Alternatively, a lock switch and the front handle or the rear handle are independently disposed, that is, the lock switch may not be disposed on the front handle or the rear handle. A position where the lock switch is disposed is not limited in the example of the present application and may be configured according to a specific situation. The lock switch 115 is used for improving the operation security of the garden tool. The lock switch 115 may be disposed on the front handle 111 or the rear handle 112. Generally, for ease of operation, the lock switch 115 is typically disposed on the rear handle 112.

When the garden tool includes the first operation switch, the second operation switch, and the lock switch, the controller may control the electric motor in the manners below.

In an illustrative example, the controller is further configured to control the electric motor according to the on/off states of the first operation switch, the second operation switch, and the lock switch.

In a possible implementation, the controller is configured to, in the case where the first operation switch, the second operation switch, and the lock switch are sequentially in the on state in a specific sequence, control the electric motor to start.

The specific sequence refers to a sequence specified by a technician in advance. For example, the controller detects the sequence in which the first operation switch, the second operation switch, and the lock switch are turned on. In the case where it is determined that the first operation switch, the second operation switch, and the lock switch are turned on in the specific sequence, the controller controls the electric motor to start.

For example, after the first operation switch, the second operation switch, or the lock switch is triggered by the turn-on, the controller is powered on and may record the identifier of the switch at this time (the identifier of the switch is used for identifying the switch and may be used for indicating that the switch is the first operation switch, the second operation switch, or the lock switch) and a turn-on trigger time point of the switch, then, the controller may receive a turn-on trigger signal of another switch and record the identifier of the switch and a turn-on trigger time point at which the turn-on trigger signal is received, and the controller may determine, according to the turn-on trigger time points of the first operation switch, the second operation switch, and the lock switch, whether the sequence in which the first operation switch, the second operation switch, and the lock are turned on matches the specific sequence. For example, the identifier of the first operation switch is 01, the identifier of the second operation switch is 10, and the identifier of the lock switch is 11. The user turns on the first operation switch at 10: 00, the first operation switch is triggered by the turn-on, the controller is powered on, and the controller records the following content: 01 and 10: 00. The user turns on the lock switch at 10: 01, the lock switch is triggered by the turn-on, the lock switch sends the turn-on trigger signal to the controller, and the controller records the following content: 11 and 10: 01. The user turns on the second operation switch at 10: 02, the second operation switch is triggered by the turn-on, the second operation switch sends the turn-on trigger signal to the controller, and the controller records the following content: 10 and 10: 02. The controller determines, according to the turn-on trigger time points, 10: 00, 10:01, and 10: 02, that the first operation switch is turned on first, the lock switch is turned on later, and the second operation switch is turned on finally.

In a possible implementation, the controller may determine, in the following manner, the sequence in which the first operation switch, the lock switch, and the second operation switch are turned on: after the first operation switch, the second operation switch, or the lock switch is triggered by the turn-on, the controller is powered on and may record the identifier of the switch at this time and turn-on trigger order corresponding to the switch, then, the controller may receive a turn-on trigger signal of another switch and record the identifier of the switch and turn-on trigger order at the time when the turn-on trigger signal is received, and the controller may determine, according to the turn-on trigger order of the first operation switch, the lock switch, and the second operation switch, the sequence in which the first operation switch, the lock switch, and the second operation switch are turned on. For example, the identifier of the first operation switch is 01, the identifier of the second operation switch is 10, and the identifier of the lock switch is 11. The user turns on the second operation switch at 11: 00, the second operation switch is triggered by the turn-on, the controller is powered on, and the controller records the following content: 10 and 1. The user turns on the lock switch at 11: 01, the lock switch is triggered by the turn-on, the lock switch sends the turn-on trigger signal to the controller, and the controller records the following content: 11 and 2. The user turns on the first operation switch at 11: 02, the first operation switch is triggered by the turn-on, the first operation switch sends the turn-on trigger signal to the controller, and the controller records the following content: 01 and 3. The controller determines, according to the turn-on trigger order, 1, 2, and 3, that the second operation switch is turned on first, the lock switch is turned on later, and the first operation switch is turned on finally.

It is to be noted that the turn-on trigger signals sent by the first operation switch, the lock switch, and the second operation switch to the controller include the identifiers of the switches. Therefore, the controller may determine, according to the received turn-on trigger signals, that the first operation switch, the second operation switch, or the lock switch is triggered by the turn-on at present so that the identifiers of the switches and the turn-on trigger time points/turn-on trigger order of the switches are recorded correspondingly.

For example, after the controller is powered off, the identifiers of the switches and the turn-on trigger time points/turn-on trigger order corresponding to the switches previously stored in the controller are cleared. After the controller is powered on next time, the controller records the identifiers of the switches and the turn-on trigger time points/turn-on trigger order corresponding to the switches again, so as to determine the sequence in which the first operation switch, the lock switch, and the second operation switch are turned on.

In a possible implementation, the garden tool includes a first detection circuit, a second detection circuit, and a third detection circuit, where the first detection circuit is configured to detect that the first operation switch is turned on/off, the second detection circuit is configured to detect that the second operation switch is turned on/off, and the third detection circuit is configured to detect that the lock switch is turned on/off. After determining that the first operation switch is triggered by the turn-on, the first detection circuit sends the turn-on trigger signal to the controller. The controller records the identifier of the first operation switch (the identifier of the first operation switch is used for indicating the first operation switch, and the first detection circuit corresponds to the first operation switch) and the turn-on trigger time point/turn-on trigger order of the first operation switch. After determining that the second operation switch is triggered by the turn-on, the second detection circuit sends the turn-on trigger signal to the controller. The controller records the identifier of the second operation switch (the identifier of the second operation switch is used for indicating the second operation switch, and the second detection circuit corresponds to the second operation switch) and the turn-on trigger time point/turn-on trigger order of the second operation switch. After determining that the lock switch is triggered by the turn-on, the third detection circuit sends the turn-on trigger signal to the controller. The controller records the identifier of the lock switch (the identifier of the lock switch is used for indicating the lock switch, and the third detection circuit corresponds to the lock switch) and the turn-on trigger time point/turn-on trigger order of the lock switch. The controller determines, according to the turn-on trigger time points/turn-on trigger order, the sequence in which the first operation switch, the second operation switch, and the lock switch are turned on.

It is to be noted that the turn-on trigger signals sent by the first detection circuit, the second detection circuit, and the third detection circuit to the controller include the identifiers of the switches. Therefore, the controller may determine, according to the received turn-on trigger signals, that the first operation switch, the second operation switch, or the lock switch is triggered by the turn-on at present so that the identifiers of the switches and the turn-on trigger time points/turn-on trigger order of the switches are recorded correspondingly.

For example, after the controller is powered off, the identifiers of the switches and the turn-on trigger time points/turn-on trigger order corresponding to the switches previously stored in the controller are cleared. After the controller is powered on next time, the controller records the identifiers of the switches and the turn-on trigger time points/turn-on trigger order corresponding to the switches again, so as to determine the sequence in which the first operation switch, the lock switch, and the second operation switch are turned on.

In the example of the present application, after determining that the first operation switch, the lock switch, and the second operation switch are turned on in the specific sequence, the controller controls the electric motor to start, and the gardening tool may start to work. Compared with the related art in which two operation switches only need to be turned on so that an electric motor can be started, the user needs to sequentially turn on the switches in the specific sequence strictly, thereby improving the operation security of the garden tool.

In the example of the present application, in addition to the first operation switch and the second operation switch, the lock switch is additionally disposed, thereby further improving the operation security of the garden tool.

In a possible implementation, the controller is configured to, in the case where the first operation switch, the lock switch, and the second operation switch are sequentially in the on state, control the electric motor to start.

In this case, the specific sequence refers to that the first operation switch is the first, the lock switch is the second, and the second operation switch is the last. When determining that the first operation switch changes from the off state to the on state first, the lock switch changes from the off state to the on state later, and the second operation switch changes from the off state to the on state finally, the controller controls the electric motor to start.

For example, the garden tool further includes a work indicator, where the work indicator is used for indicating that a switch of the garden tool is triggered and the controller is powered on. In response to the first operation switch being triggered, the work indicator is on; in response to the lock switch being triggered, the work indicator is on; or in response to the second operation switch being triggered, the work indicator is on.

In a possible implementation, the garden tool further includes a light for displaying battery pack power, and the light for displaying the battery pack power is used for indicating the battery pack power. For example, when the battery pack power is in a first power range (the power is greater than or equal to a first threshold and less than or equal to a second threshold), the light for displaying the battery pack power displays a first color, and when the battery pack power is in a second power range (the power is greater than the second threshold and less than or equal to a third threshold), the light for displaying the battery pack power displays a second color. Values of the first threshold, the second threshold, and the third threshold may be set by the technician. For example, the first threshold may be 0, the second threshold may be 50, and the third threshold may be 100. Of course, in another possible implementation, the ranges between which the color of the light for displaying the battery pack power changes may be other ranges, which is not limited in the example of the present application. For example, the light for displaying the battery pack power displays only two colors, and the colors of the light for displaying the battery pack power correspond to only two power ranges.

In a possible implementation, the controller is configured to, in the case where the first operation switch, the second operation switch, and the lock switch are sequentially in the on state, control the electric motor to start.

In this case, the specific sequence refers to that the first operation switch is the first, the second operation switch is the second, and the lock switch is the last. When determining that the first operation switch changes from the off state to the on state first, the second operation switch changes from the off state to the on state later, and the lock switch changes from the off state to the on state finally, the controller controls the electric motor to start.

In a possible implementation, in the process where the electric motor runs, if the first operation switch changes from the on state to the off state, the controller is configured to control the electric motor to stop.

For example, after the user turns on the first operation switch, the lock switch, and the second operation switch in the specific sequence, the electric motor runs. However, in the process where the electric motor runs, the user releases the first operation switch, that is, the first operation switch changes from the on state to the off state. In this case, the controller receives a turn-off trigger signal from the first operation switch, and the controller controls the electric motor to stop. The turn-off trigger signal is used for indicating that the switch is turned off.

In a possible implementation, after the controller controls the electric motor to stop, if the first operation switch changes from the off state to the on state, the controller is still configured to control the electric motor to stop.

For example, after the first operation switch changes from the on state to the off state and the controller controls the electric motor to stop, the user turns on the first operation switch again. That is, after the first operation switch changes from the off state to the on state, the controller still controls the electric motor to stop.

In a possible implementation, after the controller controls the electric motor to stop, if the first operation switch, the lock switch, and the second operation switch are sequentially in the on state again in the specific sequence, the controller is configured to control the electric motor to start.

For example, after the first operation switch changes from the on state to the off state and the controller controls the electric motor to stop, the user turns on the first operation switch, the lock switch, and the second operation switch in the specific sequence, that is, the first operation switch, the lock switch, and the second operation switch are sequentially in the on state in the specific sequence again, and the controller controls the electric motor to start.

In the process where the electric motor runs, the first operation switch is turned off, and the electric motor stops. The user turns on the first operation switch again, and the electric motor still does not start. The electric motor does not restart until the user turns on the first operation switch, the second operation switch, and the lock switch in the specific sequence again.

In an illustrative example, in the process where the electric motor runs, if the second operation switch changes from the on state to the off state, the controller is configured to control the electric motor to stop.

For example, after the user turns on the first operation switch, the lock switch, and the second operation switch in the specific sequence, the electric motor runs. However, in the process where the electric motor runs, the user releases the second operation switch, that is, the second operation switch changes from the on state to the off state. In this case, the controller receives a turn-off trigger signal from the second operation switch, and the controller controls the electric motor to stop.

In the process where the electric motor runs, the first operation switch or the second operation switch is turned off, and the electric motor stops.

In an illustrative example, after the controller controls the electric motor to stop, if the second operation switch changes from the off state to the on state and the first operation switch and the lock switch are in the on state, the controller is configured to control the electric motor to start.

For example, after the second operation switch changes from the on state to the off state and the controller controls the electric motor to stop, the user turns on the second operation switch again. In addition, in the process where the second operation switch changes from the on state to the off state and the electric motor stops, the first operation switch and the lock switch are still in the on state. In this case, the controller controls the electric motor to start.

In the process where the electric motor runs, the second operation switch is turned off, and the electric motor stops. After the user restarts the second operation switch, the electric motor starts.

In an illustrative example, in the process where the electric motor runs, if the lock switch changes from the on state to the off state, the controller is configured to control the electric motor to start.

For example, after the user turns on the first operation switch, the lock switch, and the second operation switch in the specific sequence, the electric motor runs. However, in the process where the electric motor runs, the lock switch changes from the on state to the off state. In this case, the controller still controls the electric motor to start, that is, the electric motor is still in the running state.

In an illustrative example, in the process where the electric motor runs, if the lock switch changes from the on state to the off state, the controller is configured to control the electric motor to stop.

For example, after the user turns on the first operation switch, the second operation switch, and the lock switch in the specific sequence, the electric motor runs. However, in the process where the electric motor runs, the lock switch changes from the on state to the off state. In this case, the controller controls the electric motor to stop.

Reference is made to FIG. 1 which is a schematic view of a garden tool 100 according to an example of the present application. The garden tool 100 includes an electric motor (not shown in the figure) and a housing 110.

For example, as shown in FIG. 1, the garden tool 100 further includes an operation assembly 120.

For example, the garden tool 100 includes any one of a pruner, a string trimmer, a chain saw, and the like.

The pruner is one of the main "members" of garden tools. The pruner is used for pruning branches and hedges to make them grow healthily and be more neat and graceful so that ornamental values are improved. The pruner is an indispensable tool for the greening of courtyards, parks, roads, and the like. The string trimmer may be used for mowing lawns. The string trimmer may directly drive, through a motor rotating at a high speed, a nylon line or a blade on a trimmer head to rotate, thereby cutting grass and achieving a mowing object. The chain saw may be used for sawing wood, branches, and trunks in ground working places or trimming and sawing branches and trunks of various tall trees.

For example, the housing 110 is used for forming an accommodating cavity which accommodates the electric motor. The electric motor is configured to drive the operation assembly 120 to implement functions of a garden tool. In a possible implementation, the garden tool 100 further includes a transmission assembly. The accommodating cavity may be further used for accommodating the transmission assembly. The transmission assembly is used for implementing power transfer between the electric motor and the operation assembly so that the operation assembly is driven to move. For example, the electric motor further includes the shaft of the electric motor which is rotatable about the axis of the electric motor. Part of the operation assembly is accommodated in the accommodating cavity of a housing, and the other part of the operation assembly extends out of the housing along the direction of a longitudinal axis. In the case where the garden tool 100 includes the pruner, the operation assembly 120 includes a blade assembly and the electric motor is configured to drive the blade assembly to implement a cutting function. In the case where the garden tool 100 includes the string trimmer, the operation assembly 120 includes a grass cutting line and the electric motor is configured to drive the grass cutting line to implement a cutting function. In the case where the garden tool 100 includes the chain saw, the operation assembly 120 includes a chain and the electric motor is configured to drive the chain to implement a cutting function.

For example, the garden tool further includes a power supply apparatus. The power supply apparatus is configured to supply power to the electric motor. The power supply apparatus may be a DC power supply. For example, the power supply apparatus includes a battery pack which can be detachably mounted to the housing. In the case where the power supply apparatus includes the battery pack, the housing may further include a coupling portion. The coupling portion is used for detachably coupling the battery pack to the housing along the direction of the longitudinal axis.

In the example of the present application, the housing 110 is further formed with or connected to a front handle 111 and a rear handle 112 for a user to hold. The front handle 111 is held by one hand of the user, and the rear handle 112 is held by the other hand of the user. The front handle 111 and the rear handle 112 are two different handles. In a possible implementation, the front handle 111 is connected to the outer wall of the housing 110, and the rear handle 112 is extended from the housing 110. The housing 110 extends upward to form the rear handle 112. The front handle 111 is fixedly mounted to the housing 110. That is, the rear handle 112 is formed by the housing 110, and the front handle 111 is independent of the housing 110 and is fixed to the housing 110 through fasteners. Of course, in another possible implementation, the front handle 111 and the housing 110 may be integrally formed, which is not limited in the example of the present application.

The front handle 111 is disposed on the front side of the rear handle 112 to enable the user to hold the front handle 111 and the rear handle 112 simultaneously with both hands when operating the garden tool, thereby implementing more stable operation.

For example, the front handle 111 is closer to the operation assembly 120 than the rear handle 112, and the front handle 111 is spaced a certain distance from the rear handle 112 in the direction of the longitudinal axis so that the user can control the garden tool more stably.

In the example of the present application, the garden tool 100 further includes a first operation switch 113. The first operation switch 113 is controlled by the front handle 111, which refers to that the user may control the first operation switch 113 by operating the front handle 111. For example, the first operation switch 113 is disposed on the front handle 111. Alternatively, the front handle 111 and the first operation switch 113 are independently disposed, that is, the first operation switch 113 may not be disposed on the front handle 111. A position where the first operation switch 113 is disposed is not limited in the example of the present application and may be configured according to a specific situation.

In the example of the present application, the garden tool 100 further includes a second operation switch 114. The second operation switch 114 is controlled by the rear handle 112, which refers to that the user may control the second operation switch 114 by operating the rear handle 112. For example, the second operation switch 114 is disposed on the rear handle 112. Alternatively, the rear handle 112 and the second operation switch 114 are independently disposed, that is, the second operation switch 114 may not be disposed on the rear handle 112. A position where the second operation switch 114 is disposed is not limited in the example of the present application and may be configured according to the specific situation.

In the example of the present application, the first operation switch 113 is a pressure sensing switch, where the pressure sensing switch is in the on state when sensing that the pressure sensing switch is held, and the pressure sensing switch is in the off state when sensing that the pressure sensing switch is released. A pressure sensing switch refers to a switch sensing pressure or a hold. The pressure sensing switch is in the on state when the pressure or the hold is sensed and is in the off state when no pressure or hold is sensed. When the user holds the front handle 111, the first operation switch 113 is in the on state. When the user releases the front handle 111, the first operation switch 113 is in the off state.

In a possible implementation, the pressure sensing switch includes a pressing portion and a flexible thin-film pressure sensor which is connected to the pressing portion, and the pressure sensing switch may detect, through the flexible thin-film pressure sensor, pressure acting on the pressing portion. The pressing portion may be held by the user. For example, the pressing portion may be disposed separately from the front handle. For example, the pressing portion may be disposed outside the front handle and the user may directly contact the pressing portion; or the pressing portion and the front handle may be integrally formed and the user holds the pressing portion while holding the front handle, which is not limited in the example of the present application.

For example, the second operation switch 114 may be a pressure sensing switch. Alternatively, the second operation switch may form a rotatable connection with the rear handle. Alternatively, the second operation switch may form a slidable connection with the rear handle. The type of the second operation switch is not limited in the example of the present application. In the case where the second operation switch 114 is the pressure sensing switch, when the user holds the rear handle 112, the second operation switch 114 is in the on state, and when the user releases the rear handle 112, the second operation switch 114 is in the off state.

In summary, in the technical solution provided in the example of the present application, the operation switch disposed on the front handle of the garden tool is configured to be the pressure sensing switch. Since the user must hold the front handle when operating the garden tool, the pressure sensing switch is more convenient to operate, which provides better user experience and reduces the probability that the user binds a front handle switch to start the garden tool quickly, thereby improving the operation security of the garden tool.

In a possible implementation, the garden tool further includes a controller (not shown in the figure). The controller is configured to control the electric motor according to a sequence in which the first operation switch and the second operation switch are turned on. The sequence in which the first operation switch and the second operation switch are turned on refers to a time sequence in which the first operation switch is in the on state and the second operation switch is in the on state. The sequence in which the first operation switch and the second operation switch are turned on may include any one of the following sequences: the first operation switch is in the on state first and the second operation switch is in the on state later; the second operation switch is in the on state first and the first operation switch is in the on state later; and the first operation switch and the second operation switch are in the on state at the same time. The controller is configured to control the start and stop of the electric motor. The controller may control the start and stop of the electric motor according to the on/off state of the first operation switch and the on/off state of the second operation switch.

For example, in the case where the electric motor does not run, the controller may control the electric motor in the following manner: when the first operation switch is in the on state first and the second operation switch is in the on state later, the controller controls the electric motor to start, when the second operation switch is in the on state first and the first operation switch is in the on state later, the controller does not control the electric motor to start, and when the first operation switch and the second operation switch are in the on state at the same time, the controller does not control the electric motor to start.

It is to be noted that the sequence in which the first operation switch and the second operation switch are turned on refers to a sequence in which the first operation switch changes from the off state to the on state and the second operation switch changes from the off state to the on state, instead of a sequence in which one operation switch is always in the on state and the other operation switch changes from the off state to the on state.

In an illustrative example, the controller is configured to, in the case where the first operation switch is in the on state first and the second operation switch is in the on state later, control the electric motor to start.

In the case where the first operation switch changes from the off state to the on state first and the second operation switch changes from the off state to the on state later, the controller controls the electric motor to start.

For example, the controller may detect the sequence in which the first operation switch and the second operation switch are turned on. In a possible implementation, the controller may determine, in the following manner, the sequence in which the first operation switch and the second operation switch are turned on: after the first operation switch or the second operation switch is turned on, the controller is powered on and may record the identifier of the switch at this time (the identifier of the switch is used for identifying the switch and may be used for indicating that the switch is the first operation switch or the second operation switch) and a turn-on trigger time point of the switch, then, the controller may receive a turn-on trigger signal of another switch and record the identifier of the switch and a turn-on trigger time point at which the turn-on trigger signal is received, and the controller may determine, according to the turn-on trigger time point of the first operation switch and the turn-on trigger time point of the second operation switch, the sequence in which the first operation switch and the second operation switch are turned on. For example, the identifier of the first operation switch is 01, and the identifier of the second operation switch is 10. The user turns on the first operation switch at 10: 00, the first operation switch is triggered by the turn-on, the controller is powered on, and the controller records the following content: 01 and 10: 00. The user turns on the second operation switch at 10: 02, the second operation switch is triggered by the turn-on, the second operation switch sends the turn-on trigger signal to the controller, and the controller records the following content: 10 and 10: 02. The controller determines, according to 10: 00 and 10: 02, that the first operation switch is turned on first and the second operation switch is turned on later.

In a possible implementation, the controller may determine, in the following manner, the sequence in which the first operation switch and the second operation switch are turned on: after the first operation switch or the second operation switch is triggered by the turn-on, the controller is powered on and may record the identifier of the switch at this time and turn-on trigger order corresponding to the switch, then, the controller may receive a turn-on trigger signal of another switch and record the identifier of the switch and turn-on trigger order at the time when the turn-on trigger signal is received, and the controller may determine, according to the turn-on trigger order of the first operation switch and the turn-on trigger order of the second operation switch, the sequence in which the first operation switch and the second operation switch are turned on. For example, the identifier of the first operation switch is 01, and the identifier of the second operation switch is 10. The user turns on the second operation switch at 11: 00, the second operation switch is triggered by the turn-on, the controller is powered on, and the controller records the following content: 10 and 1. The user turns on the first operation switch at 11: 02, the first operation switch is triggered by the turn-on, the first operation switch sends the turn-on trigger signal to the controller, and the controller records the following content: 01 and 2. The controller determines, according to the turn-on trigger order, 1 and 2, that the second operation switch is turned on first and the first operation switch is turned on later.

It is to be noted that the turn-on trigger signals sent by the first operation switch and the second operation switch to the controller include the identifiers of the switches. Therefore, the controller may determine, according to the received turn-on trigger signals, that the first operation switch is triggered by the turn-on or the second operation switch is triggered by the turn-on at present so that the identifiers of the switches and the turn-on trigger time points/turn-on trigger order of the switches are recorded correspondingly. The turn-on trigger signal is used for indicating that the switch is turned on.

For example, after the controller is powered off, the identifiers of the switches and the turn-on trigger time points/turn-on trigger order corresponding to the switches previously stored in the controller are cleared. After the controller is powered on next time, the controller records the identifiers of the switches and the turn-on trigger time points/turn-on trigger order corresponding to the switches again, so as to determine the sequence in which the first operation switch and the second operation switch are turned on.

In a possible implementation, the garden tool includes a first detection circuit and a second detection circuit, where the first detection circuit is configured to detect that the first operation switch is turned on/off, and the second detection circuit is configured to detect that the second operation switch is turned on/off. After determining that the first operation switch is triggered by the turn-on, the first detection circuit sends the turn-on trigger signal to the controller. The controller records the identifier of the first operation switch (the identifier of the first operation switch is used for indicating the first operation switch, and the first detection circuit corresponds to the first operation switch) and the turn-on trigger time point/turn-on trigger order of the first operation switch. After determining that the second operation switch is triggered by the turn-on, the second detection circuit sends the turn-on trigger signal to the controller. The controller records the identifier of the second operation switch (the identifier of the second operation switch is used for indicating the second operation switch, and the second detection circuit corresponds to the second operation switch) and the turn-on trigger time point/turn-on trigger order of the second operation switch. The controller determines, according to the turn-on trigger time points/turn-on trigger order, the sequence in which the first operation switch and the second operation switch are turned on.

It is to be noted that the turn-on trigger signals sent by the first detection circuit and the second detection circuit to the controller include the identifiers of the operation switches. Therefore, the controller may determine, according to the received turn-on trigger signals, that the first operation switch is triggered by the turn-on or the second operation switch is triggered by the turn-on at present so that the identifiers of the operation switches and the turn-on trigger time points/turn-on trigger order of the operation switches are recorded correspondingly.

For example, after the controller is powered off, the identifiers of the operation switches and the turn-on trigger time points/turn-on trigger order corresponding to the operation switches previously stored in the controller are cleared. After the controller is powered on next time, the controller records the identifiers of the operation switches and the turn-on trigger time points/turn-on trigger order corresponding to the operation switches again, so as to determine the sequence in which the first operation switch and the second operation switch are turned on.

In the example of the present application, the electric motor is controlled according to the sequence in which the first operation switch controlled by the front handle and the second operation switch controlled by the rear handle are turned on. Compared with the related art in which two operation switches only need to be turned on so that an electric motor can be started, the electric motor needs to be controlled, according to the sequence in which the two operation switches are turned on, to start in the example of the present application, thereby improving the operation security of the garden tool.

In an illustrative example, as shown in FIG. 1, the garden tool further includes a lock switch 115 controlled by the front handle 111 or the rear handle 112, that is, the user may control the lock switch 115 by operating the front handle 111 or the rear handle 112. For example, the lock switch 115 may be disposed on the front handle 111 or the rear handle 112. Alternatively, a lock switch and the front handle or the rear handle are independently disposed, that is, the lock switch may not be disposed on the front handle or the rear handle. A position where the lock switch is disposed is not limited in the example of the present application and may be configured according to a specific situation. The lock switch 115 is used for improving the operation security of the garden tool. The lock switch 115 may be disposed on the front handle 111 or the rear handle 112. Generally, for ease of operation, the lock switch 115 is typically disposed on the rear handle 112.

When the garden tool includes the first operation switch, the second operation switch, and the lock switch, the controller may control the electric motor in the manners below. In an illustrative example, the controller is further configured to control the electric motor according to the on/off states of the first operation switch, the second operation switch, and the lock switch.

In a possible implementation, the controller is configured to, in the case where the first operation switch, the second operation switch, and the lock switch are sequentially in the on state in a specific sequence, control the electric motor to start.

The specific sequence refers to a sequence specified by a technician in advance. For example, the controller detects the sequence in which the first operation switch, the second operation switch, and the lock switch are turned on. In the case where it is determined that the first operation switch, the second operation switch, and the lock switch are turned on in the specific sequence, the controller controls the electric motor to start.

For example, after the first operation switch, the second operation switch, or the lock switch is triggered by the turn-on, the controller is powered on and may record the identifier of the switch at this time (the identifier of the switch is used for identifying the switch and may be used for indicating that the switch is the first operation switch, the second operation switch, or the lock switch) and a turn-on trigger time point of the switch, then, the controller may receive a turn-on trigger signal of another switch and record the identifier of the switch and a turn-on trigger time point at which the turn-on trigger signal is received, and the controller may determine, according to the turn-on trigger time points of the first operation switch, the second operation switch, and the lock switch, whether the sequence in which the first operation switch, the second operation switch, and the lock are turned on matches the specific sequence. For example, the identifier of the first operation switch is 01, the identifier of the second operation switch is 10, and the identifier of the lock switch is 11. The user turns on the first operation switch at 10: 00, the first operation switch is triggered by the turn-on, the controller is powered on, and the controller records the following content: 01 and 10: 00. The user turns on the lock switch at 10: 01, the lock switch is triggered by the turn-on, the lock switch sends the turn-on trigger signal to the controller, and the controller records the following content: 11 and 10: 01. The user turns on the second operation switch at 10: 02, the second operation switch is triggered by the turn-on, the second operation switch sends the turn-on trigger signal to the controller, and the controller records the following content: 10 and 10: 02. The controller determines, according to the turn-on trigger time points, 10: 00, 10:01, and 10: 02, that the first operation switch is turned on first, the lock switch is turned on later, and the second operation switch is turned on finally.

In a possible implementation, the controller may determine, in the following manner, the sequence in which the first operation switch, the lock switch, and the second operation switch are turned on: after the first operation switch, the second operation switch, or the lock switch is triggered by the turn-on, the controller is powered on and may record the identifier of the switch at this time and turn-on trigger order corresponding to the switch, then, the controller may receive a turn-on trigger signal of another switch and record the identifier of the switch and turn-on trigger order at the time when the turn-on trigger signal is received, and the controller may determine, according to the turn-on trigger order of the first operation switch, the lock switch, and the second operation switch, the sequence in which the first operation switch, the lock switch, and the second operation switch are turned on. For example, the identifier of the first operation switch is 01, the identifier of the second operation switch is 10, and the identifier of the lock switch is 11. The user turns on the second operation switch at 11: 00, the second operation switch is triggered by the turn-on, the controller is powered on, and the controller records the following content: 10 and 1. The user turns on the lock switch at 11: 01, the lock switch is triggered by the turn-on, the lock switch sends the turn-on trigger signal to the controller, and the controller records the following content: 11 and 2. The user turns on the first operation switch at 11: 02, the first operation switch is triggered by the turn-on, the first operation switch sends the turn-on trigger signal to the controller, and the controller records the following content: 01 and 3. The controller determines, according to the turn-on trigger order, 1, 2, and 3, that the second operation switch is turned on first, the lock switch is turned on later, and the first operation switch is turned on finally.

It is to be noted that the turn-on trigger signals sent by the first operation switch, the lock switch, and the second operation switch to the controller include the identifiers of the switches. Therefore, the controller may determine, according to the received turn-on trigger signals, that the first operation switch, the second operation switch, or the lock switch is triggered by the turn-on at present so that the identifiers of the switches and the turn-on trigger time points/turn-on trigger order of the switches are recorded correspondingly.

For example, after the controller is powered off, the identifiers of the switches and the turn-on trigger time points/turn-on trigger order corresponding to the switches previously stored in the controller are cleared. After the controller is powered on next time, the controller records the identifiers of the switches and the turn-on trigger time points/turn-on trigger order corresponding to the switches again, so as to determine the sequence in which the first operation switch, the lock switch, and the second operation switch are turned on.

In a possible implementation, the garden tool includes a first detection circuit, a second detection circuit, and a third detection circuit, where the first detection circuit is configured to detect that the first operation switch is turned on/off, the second detection circuit is configured to detect that the second operation switch is turned on/off, and the third detection circuit is configured to detect that the lock switch is turned on/off. After determining that the first operation switch is triggered by the turn-on, the first detection circuit sends the turn-on trigger signal to the controller. The controller records the identifier of the first operation switch (the identifier of the first operation switch is used for indicating the first operation switch, and the first detection circuit corresponds to the first operation switch) and the turn-on trigger time point/turn-on trigger order of the first operation switch. After determining that the second operation switch is triggered by the turn-on, the second detection circuit sends the turn-on trigger signal to the controller. The controller records the identifier of the second operation switch (the identifier of the second operation switch is used for indicating the second operation switch, and the second detection circuit corresponds to the second operation switch) and the turn-on trigger time point/turn-on trigger order of the second operation switch. After determining that the lock switch is triggered by the turn-on, the third detection circuit sends the turn-on trigger signal to the controller. The controller records the identifier of the lock switch (the identifier of the lock switch is used for indicating the lock switch, and the third detection circuit corresponds to the lock switch) and the turn-on trigger time point/turn-on trigger order of the lock switch. The controller determines, according to the turn-on trigger time points/turn-on trigger order, the sequence in which the first operation switch, the second operation switch, and the lock switch are turned on.

It is to be noted that the turn-on trigger signals sent by the first detection circuit, the second detection circuit, and the third detection circuit to the controller include the identifiers of the switches. Therefore, the controller may determine, according to the received turn-on trigger signals, that the first operation switch, the second operation switch, or the lock switch is triggered by the turn-on at present so that the identifiers of the switches and the turn-on trigger time points/turn-on trigger order of the switches are recorded correspondingly.

For example, after the controller is powered off, the identifiers of the switches and the turn-on trigger time points/turn-on trigger order corresponding to the switches previously stored in the controller are cleared. After the controller is powered on next time, the controller records the identifiers of the switches and the turn-on trigger time points/turn-on trigger order corresponding to the switches again, so as to determine the sequence in which the first operation switch, the lock switch, and the second operation switch are turned on.

In the example of the present application, after determining that the first operation switch, the lock switch, and the second operation switch are turned on in the specific sequence, the controller controls the electric motor to start, and the gardening tool may start to work. Compared with the related art in which two operation switches only need to be turned on so that an electric motor can be started, the user needs to sequentially turn on the switches in the specific sequence strictly, thereby improving the operation security of the garden tool.

In the example of the present application, in addition to the first operation switch and the second operation switch, the lock switch is additionally disposed, thereby further improving the operation security of the garden tool.

In a possible implementation, the controller is configured to, in the case where the first operation switch, the lock switch, and the second operation switch are sequentially in the on state, control the electric motor to start.

In this case, the specific sequence refers to that the first operation switch is the first, the lock switch is the second, and the second operation switch is the last. When determining that the first operation switch changes from the off state to the on state first, the lock switch changes from the off state to the on state later, and the second operation switch changes from the off state to the on state finally, the controller controls the electric motor to start.

For example, the garden tool further includes a work indicator, where the work indicator is used for indicating that a switch of the garden tool is triggered and the controller is powered on. In response to the first operation switch being triggered, the work indicator is on; in response to the lock switch being triggered, the work indicator is on; or in response to the second operation switch being triggered, the work indicator is on.

In a possible implementation, the garden tool further includes a light for displaying battery pack power, and the light for displaying the battery pack power is used for indicating the battery pack power. For example, when the battery pack power is in a first power range (the power is greater than or equal to a first threshold and less than or equal to a second threshold), the light for displaying the battery pack power displays a first color, and when the battery pack power is in a second power range (the power is greater than the second threshold and less than or equal to a third threshold), the light for displaying the battery pack power displays a second color. Values of the first threshold, the second threshold, and the third threshold may be set by the technician. For example, the first threshold may be 0, the second threshold may be 50, and the third threshold may be 100. Of course, in another possible implementation, the ranges between which the color of the light for displaying the battery pack power changes may be other ranges, which is not limited in the example of the present application. For example, the light for displaying the battery pack power displays only two colors, and the colors of the light for displaying the battery pack power correspond to only two power ranges.

In a possible implementation, the controller is configured to, in the case where the first operation switch, the second operation switch, and the lock switch are sequentially in the on state, control the electric motor to start.

In this case, the specific sequence refers to that the first operation switch is the first, the second operation switch is the second, and the lock switch is the last. When determining that the first operation switch changes from the off state to the on state first, the second operation switch changes from the off state to the on state later, and the lock switch changes from the off state to the on state finally, the controller controls the electric motor to start.

In a possible implementation, in the process where the electric motor runs, if the first operation switch changes from the on state to the off state, the controller is configured to control the electric motor to stop.

For example, after the user turns on the first operation switch, the lock switch, and the second operation switch in the specific sequence, the electric motor runs. However, in the process where the electric motor runs, the user releases the first operation switch, that is, the first operation switch changes from the on state to the off state. In this case, the controller receives a turn-off trigger signal from the first operation switch, and the controller controls the electric motor to stop. The turn-off trigger signal is used for indicating that the switch is turned off.

In a possible implementation, after the controller controls the electric motor to stop, if the first operation switch changes from the off state to the on state, the controller is still configured to control the electric motor to stop.

For example, after the first operation switch changes from the on state to the off state and the controller controls the electric motor to stop, the user turns on the first operation switch again. That is, after the first operation switch changes from the off state to the on state, the controller still controls the electric motor to stop.

In a possible implementation, after the controller controls the electric motor to stop, if the first operation switch, the lock switch, and the second operation switch are sequentially in the on state again in the specific sequence, the controller is configured to control the electric motor to start.

For example, after the first operation switch changes from the on state to the off state and the controller controls the electric motor to stop, the user turns on the first operation switch, the lock switch, and the second operation switch in the specific sequence, that is, the first operation switch, the lock switch, and the second operation switch are sequentially in the on state in the specific sequence again, and the controller controls the electric motor to start.

In the process where the electric motor runs, the first operation switch is turned off, and the electric motor stops. The user turns on the first operation switch again, and the electric motor still does not start. The electric motor does not restart until the user turns on the first operation switch, the second operation switch, and the lock switch in the specific sequence again.

In an illustrative example, in the process where the electric motor runs, if the second operation switch changes from the on state to the off state, the controller is configured to control the electric motor to stop.

For example, after the user turns on the first operation switch, the lock switch, and the second operation switch in the specific sequence, the electric motor runs. However, in the process where the electric motor runs, the user releases the second operation switch, that is, the second operation switch changes from the on state to the off state. In this case, the controller receives a turn-off trigger signal from the second operation switch, and the controller controls the electric motor to stop.

In the process where the electric motor runs, the first operation switch or the second operation switch is turned off, and the electric motor stops.

In an illustrative example, after the controller controls the electric motor to stop, if the second operation switch changes from the off state to the on state and the first operation switch and the lock switch are in the on state, the controller is configured to control the electric motor to start.

For example, after the second operation switch changes from the on state to the off state and the controller controls the electric motor to stop, the user turns on the second operation switch again. In addition, in the process where the second operation switch changes from the on state to the off state and the electric motor stops, the first operation switch and the lock switch are still in the on state. In this case, the controller controls the electric motor to start.

In the process where the electric motor runs, the second operation switch is turned off, and the electric motor stops. After the user restarts the second operation switch, the electric motor starts.

In an illustrative example, in the process where the electric motor runs, if the lock switch changes from the on state to the off state, the controller is configured to control the electric motor to start.

For example, after the user turns on the first operation switch, the lock switch, and the second operation switch in the specific sequence, the electric motor runs. However, in the process where the electric motor runs, the lock switch changes from the on state to the off state. In this case, the controller still controls the electric motor to start, that is, the electric motor is still in the running state.

In an illustrative example, in the process where the electric motor runs, if the lock switch changes from the on state to the off state, the controller is configured to control the electric motor to stop.

For example, after the user turns on the first operation switch, the second operation switch, and the lock switch in the specific sequence, the electric motor runs. However, in the process where the electric motor runs, the lock switch changes from the on state to the off state. In this case, the controller controls the electric motor to stop.

It is to be understood that "multiple" mentioned herein means two or more. "And/or" describes an association relationship between associated objects and indicates that three relationships may exist. For example, A and/or B may indicate the following three cases: A exists alone; A and B exist at the same time; and B exists alone. The character "/" generally indicates an "or" relationship between associated objects before and after the character.

## Claims

1. A garden tool, comprising:
an electric motor;
a housing formed with or connected to a front handle and a rear handle for a user to hold, wherein the front handle is held by one hand of the user, and the rear handle is held by the other hand of the user;
a first operation switch disposed on the front handle;
a second operation switch disposed on the rear handle; and
a controller configured to control, according to a sequence in which the first operation switch and the second operation switch are turned on, the electric motor to start.

2. The garden tool according to claim 1, wherein the controller is configured to:
in a case where the first operation switch is in an on state first and the second operation switch is in the on state later, control the electric motor to start.

3. The garden tool according to claim 1, further comprising a lock switch controlled by the front handle or the rear handle.

4. The garden tool according to claim 3, wherein the controller is further configured to:
control the electric motor according to on/off states of the first operation switch, the second operation switch, and the lock switch.

5. The garden tool according to claim 4, wherein the controller is configured to:
in a case where the first operation switch, the second operation switch, and the lock switch are sequentially in the on state in a specific sequence, control the electric motor to start.

6. The garden tool according to claim 5, wherein the controller is configured to:
in a case where the first operation switch, the lock switch, and the second operation switch are sequentially in the on state, control the electric motor to start.

7. The garden tool according to claim 5, wherein the controller is configured to:
in a case where the first operation switch, the second operation switch, and the lock switch are sequentially in the on state, control the electric motor to start.

8. The garden tool according to claim 4, wherein in a process where the electric motor runs, the controller is configured to control the electric motor to stop when the first operation switch changes from the on state to the off state.

9. The garden tool according to claim 8, wherein after the controller controls the electric motor to stop, the controller is still configured to control the electric motor to stop when the first operation switch changes from the off state to the on state.

10. The garden tool according to claim 8, wherein after the controller controls the electric motor to stop, the controller is configured to control the electric motor to start when the first operation switch, the lock switch, and the second operation switch are sequentially in the on state in a specific sequence again.

11. The garden tool according to claim 4, wherein in a process where the electric motor runs, the controller is configured to control the electric motor to stop when the second operation switch changes from the on state to the off state.

12. The garden tool according to claim 11, wherein after the controller controls the electric motor to stop, the controller is configured to control the electric motor to start when the second operation switch changes from the off state to the on state and the first operation switch and the lock switch are in the on state.

13. The garden tool according to any one of claims 1 to 12, wherein the first operation switch is a pressure sensing switch, the pressure sensing switch is in the on state when being held, and the pressure sensing switch is in the off state when being released.

14. A garden tool, comprising:
an electric motor;
a housing formed with or connected to a front handle and a rear handle for a user to hold, wherein the front handle is held by one hand of the user, and the rear handle is held by the other hand of the user;
a first operation switch disposed on the front handle; and
a second operation switch disposed on the rear handle;
wherein the first operation switch is a pressure sensing switch, wherein the pressure sensing switch is in an on state when being held, and the pressure sensing switch is in an off state when being released.

15. The garden tool according to claim 14, further comprising a controller;
wherein the controller is configured to control the electric motor according to a sequence in which the first operation switch and the second operation switch are turned on.

16. The garden tool according to claim 15, wherein the controller is configured to:
in a case where the first operation switch is in the on state first and the second operation switch is in the on state later, control the electric motor to start.

17. The gardening tool according to claim 14, further comprising a lock switch controlled by the front handle or the rear handle.

18. The garden tool according to claim 17, further comprising a controller;
wherein the controller is configured to control the electric motor according to on/off states of the first operation switch, the second operation switch, and the lock switch.

19. The garden tool according to claim 18, wherein the controller is configured to:
in a case where the first operation switch, the second operation switch, and the lock switch are sequentially in the on state in a specific sequence, control the electric motor to start.

20. The garden tool according to claim 19, wherein the controller is configured to:
in a case where the first operation switch, the lock switch, and the second operation switch are sequentially in the on state, control the electric motor to start.

21. The garden tool according to claim 19, wherein the controller is configured to:
in a case where the first operation switch, the second operation switch, and the lock switch are sequentially in the on state, control the electric motor to start.

22. The garden tool according to claim 18, wherein
in a process where the electric motor runs, if the first operation switch changes from the on state to the off state, the controller is configured to control the electric motor to stop.

23. The garden tool according to claim 22, wherein
after the controller controls the electric motor to stop, if the first operation switch changes from the off state to the on state, the controller is still configured to control the electric motor to stop.

24. The garden tool according to claim 22, wherein
after the controller controls the electric motor to stop, if the first operation switch, the lock switch, and the second operation switch are sequentially in the on state in a specific sequence again, the controller is configured to control the electric motor to start.

25. The garden tool according to claim 18, wherein
in a process where the electric motor runs, if the second operation switch changes from the on state to the off state, the controller is configured to control the electric motor to stop.

26. The garden tool according to claim 25, wherein
after the controller controls the electric motor to stop, if the second operation switch changes from the off state to the on state and the first operation switch and the lock switch are in the on state, the controller is configured to control the electric motor to start.
